# EUROPEAN PATENT SPECIFICATION

(11) **EP 3 216 593 B1**
(45) Date of publication and mention of the grant of the patent: **17.02.2021**
(21) Application number: 16159352.0
(22) Date of filing: 09.03.2016
(51) Int. Cl.: B29D 23/00, B29C 63/26, B29C 63/34, B32B 1/08, C09D 167/06, C09D 167/08, F16L 58/10

(54) **LINER FOR IMPACT RESISTANT GRP PIPES**
AUSKLEIDUNG FÜR SCHLAGFESTE GRP-ROHRE
DOUBLURE POUR TUYAUX GRP RÉSISTANTS AUX CHOCS

(43) Date of publication of application: 13.09.2017
(73) Proprietor: Amiblu Technology AS, 3241 Sandefjord (NO)
(72) Inventor: HAAVALDSEN, Jane Hilary Thatcher, 3202 SANDEFJORD (NO); SYVERSEN, Kjell Tony Hoen, 3202 SANDEFJORD (NO)
(74) Representative: Schneider, Sascha

(56) References cited:
- EP-A1- 1 762 581
- GB-A- 1 387 191
- US-A- 4 515 737
- US-B1- 6 241 840

## Description

### TECHNICAL FIELD AND INDUSTRIAL APPLICABILITY OF THE INVENTION

The invention relates to a glass-reinforced plastic pipe liner of improved impact performance comprising layer B) from unsaturated polyester resin, optionally mixed with vinyl ester resin reinforced by non-woven fibres and a layer C) from unsaturated polyester resin, optionally mixed with vinyl ester resin reinforced by chopped fibre strands. At least one of these layers B) or C) comprises colour pigments at 0.2 - 5.0 wt%. The invention provides flexible liners for pressure and non-pressure GRP pipes. It improves impact performance of the pipe liner whilst offering also improvements in abrasion resistance, water-jet resistance for high pressure cleaning without liner damage, increased expected lifetime by improved resistance to internal pressure and permits pigmentation of the liner. The invention also encloses a process for producing the glass-reinforced plastic pipe liner.

### BACKGROUND OF THE INVENTION

Glass fibre reinforced pipes (hereinafter GRP pipes) are somewhat sensitive to impact damage compared to thermoplastic pipes. The ability for GRP pipes to offer improved impact resistance but also maintaining inherent benefits offered by glass reinforced plastic piping with excellent lifetime, long term stiffness and low creep properties, is therefore of interest.

It is known that the introduction of flexible inner pipe-bore, or liner, materials can improve resistance to cracking on external impact and reduce the subsequent risk of passage of water through the pipe wall. However, flexible liners based on unsaturated polyester resins with no-glass reinforcement may also have limited resistance to impact in cold weather. Also, cracking due to difference in thermal affects between reinforced and non-reinforced layers in the pipe may result even in the absence of additional impact events. It should be noted that hereinafter all use of the expression "pipe" has to be taken as being identical and synonymous to the use of the expression "tube".

Pigmentation of the liner is sometimes required by the pipe user to clearly distinguish different types of pipe in an installation but must be of a lighter colour to permit visual inspection of the liner in service and not hide damage and deficiencies. Still, addition of pigments to liners of unsaturated polyester resins for pipes, when manufactured by filament winding, particularly but not limited to continuous filament winding processes with high production efficiency, will result in reduced pipe performance as the pigments affect mechanical performance and interfere with the reinforcing glass fibres resulting in reduced pipe performance. This pipe performance reduction is most notable when testing pipes for resistance to internal pressure, or hydrostatic design basis testing. All pigment inclusion in unsaturated polyester resins will affect the mechanical performance of the resin.

This known disadvantage is overcome by the careful selection of liner construction, unsaturated polyester, nature of reinforcement, construction of layers and pigmentation of the invention presented herewith. Document US 6 241 840 is directed to a continuously formed GRP pipe designed for potable water delivery, where the inner surface layer is composed of a thermoplastic resin especially suited for extended contact with potable water (see col.2, 1.60-63). Claims 1, 4, 7, 10 and 12 disclose a process for continuously producing a glass-reinforced plastic potable water pipe with an ultra-thin thermoplastic inner layer and thermoset plastic outer shell, comprising the steps of: conveying, in a semi-molten or softened forms at least one thin film of thermoplastic material, onto a mandrel circumferentially and axially to the mandrel by a first application means to form an inner layer less than 1 mm thick comprising a coextruded multi-layer thermoplastic film comprising a polyethylene film together with a terpolymer film; contemporaneous with the application of said inner layer, applying a glass-reinforced thermoset plastic resin suitable for use as pipe shell laminate directly over the advancing inner layer circumferentially and axially to the mandrel and further along the mandrel, a second application means, thereby forming an outer layer which adheres to said inner layer; said outer and inner layer forming a completed pipe; and curing the completed pipe as it is moved axially along the mandrel. Two layers are thus applied to the inner side of the pipe. According to claims 10 and 12, the polymer of both layers may be an unsaturated polyester. Moreover, the outer layer is glass fiber reinforced.

### SUMMARY OF THE INVENTION

The invention is a combination of novel liner constructions which identify flexible liners for pressure and non-pressure GRP pipes improving impact performance of the pipe liner whilst offering also improvements in abrasion resistance, water-jet resistance for high pressure cleaning without liner damage, increased expected lifetime by improved resistance to internal pressure and - optionally - permits pigmentation of the liner. Choice of the liner construction, unsaturated polyester, nature of reinforcement, construction of layers and also pigmentation has surprisingly permitted all of the above pipe properties to be achieved. The expression "tube" can be used in a synonymous way to the use of "pipe" hereinafter.

It is thus a primary object of the invention to provide a flexible liner for improving impact performance for pressure and non-pressure GRP pipes.

It is a very desirable further object of the invention to provide a flexible liner for pressure and non-pressure GRP pipes which combines this improved impact performance while allowing proper pigmentation of the liner.

It is a further desirable follow-object of the invention to provide a flexible liner for pressure and non-pressure GRP pipes which combines this improved impact performance while also offering improvements in abrasion resistance, and/or water-jet resistance for high pressure cleaning without liner damage, and/or increased expected lifetime by improved resistance to internal pressure, while preferably also allowing pigmentation of the liner.

One embodiment of the invention is a glass-reinforced plastic pipe liner of improved impact performance comprising:
- a layer B) consisting of a coat being reinforced by non-woven fibres, the coat being formed from at least one unsaturated polyester resin, optionally mixed with at least one vinyl ester resin;
- a layer C) consisting of a coat being reinforced by chopped fibre strands, the coat being formed from at least one unsaturated polyester resin, optionally mixed with at least one vinyl ester resin;
wherein at least one of the layers B) or C) comprises colour pigments present at 0.2 - 5.0 wt% per weight of the unsaturated polyester resin.

One further embodiment of the invention (called hereinafter "EMBODIMENT Z") is a glass-reinforced plastic pipe liner of improved impact performance comprising:
- a layer B) consisting of a coat being reinforced by non-woven fibres, the coat being formed from at least one unsaturated polyester resin, optionally mixed with at least one vinyl ester resin;
- a layer C) consisting of a coat being reinforced by chopped fibre strands, the coat being formed from at least one unsaturated polyester resin, optionally mixed with at least one vinyl ester resin.

In an optional further embodiment of the glass-reinforced plastic pipe liner according to the invention it comprises in addition a layer A) consisting of a coat being reinforced by a synthetic veil formed from spun-bond or thermally bonded fibres of polyester, polyamide or mixtures thereof, the coat being formed from at least one unsaturated polyester resin, optionally mixed with at least one vinyl ester resin, optionally comprising colour pigments present at 0.2 - 5.0 wt% per weight of the unsaturated polyester resin.

This embodiment might also be an embodiment of "EMBODIMENT Z".

In a preferred embodiment of the glass-reinforced plastic pipe liner according to the invention, the mechanical properties of the resin in layer B), layer C) and/or in the optional layer A) are >5 MPa tensile strength and > 30% tensile elongation to break in a non-reinforced, non-pigmented, cured state.

This embodiment might also be an embodiment of "EMBODIMENT Z".

In a further preferred embodiment of the glass-reinforced plastic pipe liner according to the invention, the pigments in layers B), C) and in optional layer A) are zinc sulphide pigments wherein the zinc sulphide pigments are present at 0.25 - 3.5 wt% per weight of the unsaturated polyester preferably at 0.5 - 2.5 wt% per weight of the unsaturated polyester.

Another aspect the invention relates to a process for the production of the glass-reinforced plastic pipe liner according to the invention, wherein the process is a continuous filament winding process or a discontinuous filament winding process.

These and other objects of the present invention will become apparent from the following general and detailed description of the invention.

### DETAILED DESCRIPTION AND PREFERRED EMBODIMENTS OF THE INVENTION

The current invention presents a novel combination of liner constructions, use of unsaturated polyester, nature of reinforcement and construction of layers as well as pigmentation.

The liner construction employs unsaturated polyester resin(s), with or without additional toughening by vinyl ester resin(s). Mechanical properties of the resin are preferentially >5 MPa tensile strength and >30% tensile elongation to break in a non-reinforced, non-pigmented, cured state, i.e. highly flexible. The highly flexible unsaturated polyester resin performance parameters with low strength do not seem at first glance appropriate for GRP piping but careful choice of liner construction and reinforcement do result in excellent pipe properties.

Thus, in the main embodiment the invention rests in a glass-reinforced plastic pipe liner of improved impact performance comprising:
- a layer B) consisting of a coat being reinforced by non-woven fibres, the coat being formed from at least one unsaturated polyester resin;
- a layer C) consisting of a coat being reinforced by chopped fibre strands, the coat being formed from at least one unsaturated polyester resin;
wherein at least one of the layers B) or C) comprises colour pigments present at 0.2 - 5.0 wt% per weight of the unsaturated polyester resin.

Very preferedly, the at least one unsaturated polyester resin of Layer B) and of layer C) is optionally mixed with at least one vinyl ester resin.

This embodiment is hereinafter referred to, if reference is made to "the glass-reinforced plastic pipe liner according to the invention". In all other references to "the invention" this includes both this embodiment and EMBODIMENT Z (see below) as well as EMBODIMENTS X and Y (see also below).

Thus, in another separate main embodiment (called "EMBODIMENT Z") the invention rests in a glass-reinforced plastic pipe liner of improved impact performance comprising:
- a layer B) consisting of a coat being reinforced by non-woven fibres, the coat being formed from at least one unsaturated polyester resin, optionally mixed with at least one vinyl ester resin;
a layer C) consisting of a coat being reinforced by chopped fibre strands, the coat being formed from at least one unsaturated polyester resin, optionally mixed with at least one vinyl ester resin.

In one further embodiment of the glass-reinforced plastic pipe liner according to the invention comprises in addition:
- a layer A) consisting of a coat being reinforced by a synthetic veil formed from spun-bond or thermally bonded fibres of polyester, polyamide or mixtures thereof, the coat being formed from at least one unsaturated polyester resin, optionally mixed with at least one vinyl ester resin, optionally comprising colour pigments present at 0.2 - 5.0 wt% per weight of the unsaturated polyester resin.

In one further embodiment of the glass-reinforced plastic pipe liner of EMBODIMENT Z it comprises in addition:
- a layer A) consisting of a coat being reinforced by a synthetic veil formed from spun-bond or thermally bonded fibres of polyester, polyamide or mixtures thereof, the coat being formed from at least one unsaturated polyester resin, optionally mixed with at least one vinyl ester resin.

It should be stressed that the presented invention is aimed at a liner construction, thus a construction on the inside of a GRP pipe. In principle the GRP pipe is either of pressure or of non-pressure type. Thus, the layers B) and C) as well as the optional layer A) are to be found - and mostly also formed - on the inside of a - and any standard - GRP pipe (pressure and non-pressure). So, these liners are the coats of the pipe that come into contact with the medium/material that is passing through the pipe. If the layer A) is not present and there are no additional layers other than layers B) and C), it is the layer B) that is in contact with the medium/material passing through the pipe while layer C) is connected to the further layers/coats of the GRP pipe extending to the outside. If the layer A) is present and there are no additional layers other than layers A), B) and C), it is the layer A) that is in contact with the medium/material passing through the pipe while layer C) is connected to the further layers/coats of the GRP pipe extending to the outside, while layer B) is sandwiched between layers A) and C).

In one preferred embodiment of the liner according to the invention layer A) is not present and there are no additional layers other than layers B) and C). Thus, the glass-reinforced plastic pipe liner of improved impact performance of the invention would be consisting of the layers B) and C).

This embodiment might also be an embodiment of "EMBODIMENT Z" (and also EMBODIMENTS X and Y; see below).

In one other preferred embodiment of the liner according to the invention layer A) is present and there are no additional layers other than layers A), B) and C). Thus, the glass-reinforced plastic pipe liner of improved impact performance of the invention would be consisting of the layers A), B) and C).

This embodiment might also be an embodiment of "EMBODIMENT Z" (and also EMBODIMENTS X and Y; see below).

The GRP pipe to which the liner of the invention can be applied is any standard GRP pipe, in principle being of pressure and non-pressure type. Examples of such pipes are Flowtite® pipes. Fitting pipes are manufactured by processes similar to those described in US3979250.These pipes are by definition pressure and non-pressure GRP pipes. Pressure and non-pressure GRP pipes can be identified by nominal diameter (DN), pressure rating (PN), and stiffness class (SN). **Diameters:** The pipe dimensions are diameter controlled, with thickness varying according to pressure and stiffness. Standard GRP pipes can be supplied in nominal diameters from 100 mm up to 4000 mm. The most common diameters are in the range 300 - 3000 mm. **Pressure:** Pressure classes of GRP pipes range from PN1 to PN32 (1 to 32 bar). Pipes are pressure rated at full operating pressure even when buried to the maximum depth recommended. Due to the exceptionally high short-term strength, occasional surge pressure allowance is 40% above the pressure class. **Stiffness Classes:** When tested in ring bending standard stiffness classes for GRP pipes are SN2500, SN5000, and SN10000, with the numerical expressed in N/m2.

"Chopped fibre strands" is understood in the context of this invention as being fibres of a - sometimes random, sometimes aimed for achieving a homogeneous even layer - arrangement and flattened into a sheet wherein the fibres are chopped to the form of the sheet. The fibres are thus mostly arranged in 2 dimensions and are added on top of each other. In most preferred examples the copped fibres reach a layer of required thickness. Potential masses are between 100 and 1000 g/m². One example of this arrangement are chopped fibres (like e.g. glass fibres) that are chopped/cut to a length of 3 to 7, 4 to 6 or around 5 cm and added/"rained-on" the resin in a regular fashion, until a certain layer thickness of resin plus chopped fibre strands is reached (e.g. of 0.05 - 4.0 mm, of 0.1 - 2.0 mm, or of 0.1 - 1.0 mm). One other preferred example are "glass fibre layer of chopped strands" or chopped strands of fibre glass.

"Coat" is understood in the context of this invention as being a layer in a liner construct according to the invention for a GRP pipe (pressure and non-pressure) formed of a distinctive material (or mixture of materials) preferably applied in one distinctive production step.

"Colour Pigment" is understood in the context of this invention as pigments of any colour that may be added to the resin. Preferably these pigments are TiO₂ or ZnS (zinc sulphide) pigments. These pigments provide white colour but also coverage/opacity. Optionally, other colours are added as mixing colour adding a different colour - in very small amounts - to the base mix of e.g. TiO₂ or ZnS colour paste. These colour pigments are usually used in the form of a paste, which is preferably added to the resin in form of a paste.

"Glass-fibre" is understood in the context of this invention as being as any kind of material consisting of numerous extremely fine fibers of glass. This material may be continuous, cut or chopped.

"Glass-reinforced plastic pipe" or GRP pipe is any pipe of plastic material that has in any of its coats or layers reinforcement by glass-fibre material. One preferred example GRP pipes are "Flowtite® Pipes" as described above.

"Liner" is understood in the context of this invention as being one or more coats applied to the interior of a pipe.

"Non-woven fibres" is understood in the context of this invention as being fibres that are arranged in a fashion without being woven. The non-woven veil (formed by this non-woven fibres) is a three dimensional tissue manufactured from bound glass fibres which may be cut or near continuous melted fibres, bound often with a polymeric binder to maintain dimensional stability. In most preferred examples, the non-woven fibers reach a specific weight of 10-100 g/m², preferably 10-75 g/m² and most preferably 15-50 g/m². One preferred example is a "glass fibre non-woven veil".

"Spun-bond fibres" is understood in the context of this invention as being synthetic fibres arranged in a fashion to form a tissue without being woven.

"Synthetic veil" is understood in the context of this invention as being an arrangement of fibres of synthetic origin that are arranged in a non-woven way in a veil. In most preferred examples the fibres arranged into this "synthetic veil" provide a specific weight the "synthetic veil" of 10-100 g/m², preferably 10-75 g/m² and most preferably 15-50 g/m². One example of a non-woven veil with polyester fibres is Lantor Finishmat 6691.

"Thermally bonded fibres" is understood in the context of this invention as being fibres that are bonded to each other by the use of raised temperature.

"Unsaturated polyester resin" is understood in the context of this invention as being a thermosetting resin formed from any unsaturated polyester. Usually it is formed by the reaction of formed by the reaction of dibasic organic acids and polyhydric alcohols. Preferred examples of the basic components are maleic anhydride, isophthalic acid or orthophthalic anhydride.

"Vinyl ester resin" is understood in the context of this invention as being a resin based on a vinyl ester. A preferred example are vinyl ester (meth)acrylates especially Ashland Derakane 8084.

In one further embodiment of the glass-reinforced plastic pipe liner of the invention the liner comprises in the layers B) and/or C) and in the optional layer A) colour pigments present at 0.2 - 5.0 wt% per weight of the unsaturated polyester resin; preferably comprising in the layers B), C) and the optional layer A) colour pigments present at 0.2 - 5.0 wt% per weight of the unsaturated polyester resin.

In one further embodiment of the glass-reinforced plastic pipe liner of the invention
- the optional layer A) has - thermally bonded - a thickness of 0.05 - 2.0 mm, preferably a thickness of 0.1 - 1.0 mm, more preferably a thickness of 0.15 - 0.35 mm; and/or
- the layer B) has a thickness of 0.1 - 4.0 mm, preferably a thickness of 0.2 - 2.0 mm, more preferably a thickness of 0.2 - 0.6 mm; and/or
- the layer C) has a thickness of 0.05 - 4.0 mm, preferably a thickness of 0.1 - 2.0 mm, more preferably a thickness of 0.1 - 1.0 mm.

This embodiment might also be an embodiment of "EMBODIMENT Z".

In one further embodiment of the glass-reinforced plastic pipe liner of the invention
- the layer B) is reinforced by a glass fibre non-woven veil; and/or
- the layer C) is reinforced by a glass fibre layer of chopped strands.

This embodiment might also be an embodiment of "EMBODIMENT Z".

In another separate embodiment (called "EMBODIMENT X") the invention rests in a glass-reinforced plastic pipe liner of improved impact performance comprising in a glass-reinforced plastic pipe liner of improved impact performance produceable by a process comprising the steps of:
- b) conveying, in a non-solid form at least one unsaturated polyester resin, optionally mixed with at least one vinyl ester resin to form a layer B) consisting of a coat formed from the at least one unsaturated polyester resin, optionally mixed with at least one vinyl ester resin, directly onto a mandrel or on top of an - optionally advancing - layer already on the mandrel circumferentially and axially to the mandrel by 2^{nd} application means, followed by applying as reinforcement non-woven fibres to the at least one unsaturated polyester resin, to form layer B);
- c) conveying, in a non-solid form at least one unsaturated polyester resin, optionally mixed with at least one vinyl ester resin to form a layer C) consisting of a coat formed from the at least one unsaturated polyester resin, optionally mixed with at least one vinyl ester resin over said - optionally advancing - layer B) formed on said mandrel, circumferentially and axially to the mandrel by 3rd application means, followed by applying as reinforcement chopped fibre strands to the at least one unsaturated polyester resin, to form layer C);
wherein at least one of the at least one unsaturated polyester resin, optionally mixed with at least one vinyl ester resin forming the layers B) or C) comprises colour pigments present at 0.2 - 5.0 wt% per weight of the unsaturated polyester resin.

In one further embodiment of the glass-reinforced plastic pipe liner of this EMBODIMENT X it comprises in addition a step:
- a) conveying, in a non-solid form at least one unsaturated polyester resin, optionally mixed with at least one vinyl ester resin to form a layer A) consisting of a coat formed from the at least one unsaturated polyester resin, optionally mixed with at least one vinyl ester resin directly onto a mandrel circumferentially and axially to the mandrel by 1^{st} application means, followed by applying as reinforcement a synthetic veil formed from spun-bond or thermally bonded fibres of polyester, polyamide or mixtures thereof to the at least one unsaturated polyester resin, to form layer A);
wherein the unsaturated polyester resin, optionally mixed with at least one vinyl ester resin forming the layer A) optionally comprises colour pigments present at 0.2 - 5.0 wt% per weight of the unsaturated polyester resin.

In another separate embodiment (called "EMBODIMENT Y") the invention rests in a glass-reinforced plastic pipe liner of improved impact performance comprising in a glass-reinforced plastic pipe liner of improved impact performance produceable by a process comprising the steps of:
- b) conveying, in a non-solid form at least one unsaturated polyester resin, optionally mixed with at least one vinyl ester resin to form a layer B) consisting of a coat formed from the at least one unsaturated polyester resin, optionally mixed with at least one vinyl ester resin, directly onto a mandrel or on top of an - optionally advancing - layer already on the mandrel circumferentially and axially to the mandrel by 2^{nd} application means, followed by applying as reinforcement non-woven fibres to the at least one unsaturated polyester resin, to form layer B);
- c) conveying, in a non-solid form at least one unsaturated polyester resin, optionally mixed with at least one vinyl ester resin to form a layer C) consisting of a coat formed from the at least one unsaturated polyester resin, optionally mixed with at least one vinyl ester resin over said - optionally advancing - layer B) formed on said mandrel, circumferentially and axially to the mandrel by 3rd application means, followed by applying as reinforcement chopped fibre strands to the at least one unsaturated polyester resin, to form layer C).

In one further embodiment of the glass-reinforced plastic pipe liner of this EMBODIMENT Y it comprises in addition a step:
- a) conveying, in a non-solid form at least one unsaturated polyester resin, optionally mixed with at least one vinyl ester resin to form a layer A) consisting of a coat formed from the at least one unsaturated polyester resin, optionally mixed with at least one vinyl ester resin directly onto a mandrel circumferentially and axially to the mandrel by 1^{st} application means, followed by applying as reinforcement a synthetic veil formed from spun-bond or thermally bonded fibres of polyester, polyamide or mixtures thereof to the at least one unsaturated polyester resin, to form layer A).

In one preferred embodiment of EMBODIMENT X or EMBODIMENT Y in step C) the chopped fibres are added (rained-on) to the unsaturated polyester resin to give an always homogeneous even layer.

In one further embodiment of the glass-reinforced plastic pipe liner of the invention the unsaturated polyester resin, optionally mixed with vinyl ester resin, in layers B) and/or C) and/or optional layer A) includes pigments selected from TiO₂ and zinc sulphide, preferably from zinc sulphide;
and/or wherein the pigments are present at 0.25 - 3.5 wt% per weight of the unsaturated polyester preferably at 0.5 - 2.5 wt% per weight of the unsaturated polyester.

This embodiment might also be an embodiment of "EMBODIMENT X".

The TiO₂ and also the zinc sulphide is usually added to the resin in form of a paste. These pigments provide white colour but also coverage/opacity. Optionally, other colours are added as mixing colour adding a different colour - in very small amounts - to the base mix of e.g. TiO₂ or ZnS colour paste.

As said above, addition of pigments to liners of unsaturated polyester resins for pipes, when manufactured by filament winding, particularly but not limited to continuous filament winding processes with high production efficiency, will result in significantly reduced pipe performance as the pigments may affect mechanical performance and interfere with the reinforcing glass fibres resulting in reduced pipe performance. This pipe performance reduction is most notable when testing pipes for resistance to internal pressure, or hydrostatic design basis testing. Pigment inclusion in unsaturated polyester resins will - especially if these are solid inorganic compounds - affect the mechanical performance of the resin.

In the current invention the careful selection of liner construction, unsaturated polyester, nature of reinforcement, construction of layers combined with the right choices in pigmentation, e.g. amount of pigments has overcome this.

In principle, the failure in pipe performance is due to the incorporation of pigmentation fillers which effect mechanical strength of the reinforcing glass fibres. It was found out however that this effect was mostly due to the incorporation of harder pigmentation fillers, notably titanium oxide. Surprisingly, the selection of softer pigments, notably zinc sulphide or talc or calcium carbonate, permits pigmentation but without the damaging effect on mechanical strength. The Mohs hardness of the chosen pigment is considered crucial for maintenance of pipe properties.

All pigment inclusion in unsaturated polyester resins will affect the mechanical performance of the resin but both titanium oxide and zinc sulphide pastes reduce mechanical performance similarly at equivalent loadings in non-reinforced castings.

It is only on incorporation also of reinforcing (glass) fibres that a reduction for titanium dioxide pastes versus zinc sulphide pastes is quantifiable.

Accordingly, in one further embodiment of the glass-reinforced plastic pipe liner of the invention, the pigments in layers B), C) and in optional layer A) are zinc sulphide pigments wherein the zinc sulphide pigments are present at 0.25 - 3.5 wt% per weight of the unsaturated polyester preferably at 0.5 - 2.5 wt% per weight of the unsaturated polyester.

Depending on the circumstances it might still be advantageous to use TiO₂. Thus, in one further embodiment of the glass-reinforced plastic pipe liner of the invention, the pigments in layers B), C) and in optional layer A) are TiO2-pigments wherein the zinc sulphide pigments are present at 0.25 - 3.5 wt% per weight of the unsaturated polyester preferably at 0.5 - 2.5 wt% per weight of the unsaturated polyester.

In one further embodiment of the glass-reinforced plastic pipe liner of the invention the at least one unsaturated polyester resin of layers B) and/or C) and/or the optional layer A) has a tensile elongation to break > 30%, preferably wherein all the unsaturated polyester resins of layers B) and/or C) and/or of the optional layer A) have a tensile elongation to break > 30%; more preferably wherein all the unsaturated polyester resins of layers B), C) and of the optional layer A) have a tensile elongation to break > 30%.

This embodiment might also be an embodiment of "EMBODIMENT Z", "EMBODIMENT X" or "EMBODIMENT Y".

In one further embodiment of the glass-reinforced plastic pipe liner of the invention the at least one unsaturated polyester resin of layers B) and/or C) and/or the optional layer A) has a tensile strength of >5 MPa, preferably wherein all the unsaturated polyester resins of layers B) and/or C) and/or of the optional layer A) have a tensile strength of >5 MPa; more preferably wherein all the unsaturated polyester resins of layers B), C) and of the optional layer A) have a tensile strength of >5 MPa.

This embodiment might also be an embodiment of "EMBODIMENT Z", "EMBODIMENT X" or "EMBODIMENT Y".

In one further embodiment of the glass-reinforced plastic pipe liner of the invention the mechanical properties of the resin in layer B), layer C) and/or in the optional layer A) are >5 MPa tensile strength and > 30% tensile elongation to break in a non-reinforced, non-pigmented, cured state.

This embodiment might also be an embodiment of "EMBODIMENT Z", "EMBODIMENT X" or "EMBODIMENT Y".

In one further embodiment of the glass-reinforced plastic pipe liner of the invention at least one unsaturated polyester resin of layer B) and/or of layer C) and/or of the optional layer A) is based on maleic anhydride, isophthalic acid and/or orthophthalic anhydride, preferably wherein at least one unsaturated polyester resin of layer B), of layer C) and of optional layer A) is based on maleic anhydride, isophthalic acid and/or orthophthalic anhydride, more preferably wherein all the unsaturated polyester resins of layer B) and/or of layer C and/or of optional layer A) are based on maleic anhydride, isophthalic acid and/or orthophthalic anhydride, most preferably wherein all the unsaturated polyester resins of layer B), layer C and of optional layer A) are based on maleic anhydride, isophthalic acid and/or orthophthalic anhydride.

This embodiment might also be an embodiment of "EMBODIMENT Z", "EMBODIMENT X" or "EMBODIMENT Y".

In one further embodiment of the glass-reinforced plastic pipe liner of the invention the unsaturated polyester resin in optional layer A) is present at ≥ 70 wt%, ≥ 75 wt% or ≥ 80 wt%, preferably at between and including 80 - 90 wt% of the weight of the resin material of layer A), preferably wherein the unsaturated polyester resin in optional layer A) is present at ≥ 80 wt% or at between and including 80 - 90% of the weight of the resin material of layer A;
and/or
wherein the unsaturated polyester resin in layer B) is present at ≥ 70 wt%, ≥ 75 wt% or ≥ 80 wt%, preferably at between and including 80 - 90 wt% of the weight of the resin material of layer B), preferably wherein the unsaturated polyester resin in optional layer B) is present at ≥ 80 wt% or at between and including 80 - 90 wt% of the weight of the resin material of layer B);
and/or
wherein the unsaturated polyester resin in layer C) is present at ≥ 40 wt%, ≥ 45 wt% or ≥ 50 wt% of the weight of the resin material of layer C), preferably at between and including 50 - 70 wt% of the weight of the resin material of layer C), preferably wherein the unsaturated polyester resin in optional layer C) is present at ≥ 50 wt% or at between and including 50 - 70 wt% of the weight of the resin material of layer C);
preferably
- wherein the unsaturated polyester resin in optional layer A) is present at ≥ 80 wt% or at between and including 80 - 90% of the weight of the resin material of layer A),
- the unsaturated polyester resin in optional layer B) is present at ≥ 80 wt% or at between and including 80 - 90% of the weight of the resin material of layer B), and
- the unsaturated polyester resin in layer C) is present at ≥ 50 wt% or at between and including 50 - 70 wt% of the weight of the resin material of layer C).

This embodiment might also be an embodiment of "EMBODIMENT Z", "EMBODIMENT X" or "EMBODIMENT Y".

In one further embodiment of the glass-reinforced plastic pipe liner of the invention the vinyl ester resin is present at 0 to 30 wt%, 0 to 20 wt% or 0 to 10 wt% of the weight of the resin material of layer B), and/or layer C) and/or the optional layer A), preferably the vinyl ester resin is present at 0 to 30 wt%, 0 to 20 wt% or 0 to 10 wt% of the weight of the resin material of layer B and layer C and the optional layer A).

This embodiment might also be an embodiment of "EMBODIMENT Z", "EMBODIMENT X" or "EMBODIMENT Y".

In one further embodiment of the glass-reinforced plastic pipe liner of the invention the vinyl ester resin in layer B) and/or layer C) and the optional layer A) is based on vinyl ester (meth)acrylates, preferably wherein the vinyl ester resins in layer B), layer C) and the optional layer A) are based on vinyl ester (meth)acrylates.

This embodiment might also be an embodiment of "EMBODIMENT Z", "EMBODIMENT X" or "EMBODIMENT Y".

In one further embodiment of the glass-reinforced plastic pipe liner of the invention the improved impact performance manifests itself at temperatures -30 to 45 °C, or -5 to 45 °C.

This embodiment might also be an embodiment of "EMBODIMENT Z", "EMBODIMENT X" or "EMBODIMENT Y".

A further aspect of the invention refers to a process for the production of the glass-reinforced plastic pipe liner of the invention, wherein the process is a continuous filament winding process or a discontinuous filament winding process. This process might also apply tp "EMBODIMENT Z", "EMBODIMENT X" or "EMBODIMENT Y".

In an embodiment of the process the invention rests in the process comprising the steps of:
- b) conveying, in a non-solid form at least one unsaturated polyester resin, optionally mixed with at least one vinyl ester resin to form a layer B) consisting of a coat formed from the at least one unsaturated polyester resin, optionally mixed with at least one vinyl ester resin, directly onto a mandrel or on top of an - optionally advancing - layer already on the mandrel circumferentially and axially to the mandrel by 2^{nd} application means, followed by applying as reinforcement non-woven fibres to the at least one unsaturated polyester resin, to form layer B);
- c) conveying, in a non-solid form at least one unsaturated polyester resin, optionally mixed with at least one vinyl ester resin to form a layer C) consisting of a coat formed from the at least one unsaturated polyester resin, optionally mixed with at least one vinyl ester resin over said - optionally advancing - layer B) formed on said mandrel, circumferentially and axially to the mandrel by 3rd application means, followed by applying as reinforcement chopped fibre strands to the at least one unsaturated polyester resin, to form layer C);
wherein at least one of the at least one unsaturated polyester resin, optionally mixed with at least one vinyl ester resin forming the layers B) or C) comprises colour pigments present at 0.2 - 5.0 wt% per weight of the unsaturated polyester resin.

In one further embodiment of this process it comprises in addition a step:
- a) conveying, in a non-solid form at least one unsaturated polyester resin, optionally mixed with at least one vinyl ester resin to form a layer A) consisting of a coat formed from the at least one unsaturated polyester resin, optionally mixed with at least one vinyl ester resin directly onto a mandrel circumferentially and axially to the mandrel by 1^{st} application means, followed by applying as reinforcement a synthetic veil formed from spun-bond or thermally bonded fibres of polyester, polyamide or mixtures thereof to the at least one unsaturated polyester resin, to form layer A);
wherein the unsaturated polyester resin, optionally mixed with at least one vinyl ester resin forming the layer A) optionally comprises colour pigments present at 0.2 - 5.0 wt% per weight of the unsaturated polyester resin.

In another separate embodiment of the process the invention rests in the process comprising the steps of:
- b) conveying, in a non-solid form at least one unsaturated polyester resin, optionally mixed with at least one vinyl ester resin to form a layer B) consisting of a coat formed from the at least one unsaturated polyester resin, optionally mixed with at least one vinyl ester resin, directly onto a mandrel or on top of an - optionally advancing - layer already on the mandrel circumferentially and axially to the mandrel by 2^{nd} application means, followed by applying as reinforcement non-woven fibres to the at least one unsaturated polyester resin, to form layer B);
- c) conveying, in a non-solid form at least one unsaturated polyester resin, optionally mixed with at least one vinyl ester resin to form a layer C) consisting of a coat formed from the at least one unsaturated polyester resin, optionally mixed with at least one vinyl ester resin over said - optionally advancing - layer B) formed on said mandrel, circumferentially and axially to the mandrel by 3rd application means, followed by applying as reinforcement chopped fibre strands to the at least one unsaturated polyester resin, to form layer C).

In one further embodiment of this process it comprises in addition a step:
- a) conveying, in a non-solid form at least one unsaturated polyester resin, optionally mixed with at least one vinyl ester resin to form a layer A) consisting of a coat formed from the at least one unsaturated polyester resin, optionally mixed with at least one vinyl ester resin directly onto a mandrel circumferentially and axially to the mandrel by 1^{st} application means, followed by applying as reinforcement a synthetic veil formed from spun-bond or thermally bonded fibres of polyester, polyamide or mixtures thereof to the at least one unsaturated polyester resin, to form layer A).

In one preferred embodiment of all these process in step C) the chopped fibres are added (rained-on) to the unsaturated polyester resin to give an always homogeneous even layer.

The invention is further illustrated by help of Examples which should not be understood as limiting.

### EXAMPLES

### Example 1:

The tables below exemplify the performance of liner constructions versus the standard 'reference' pipe and the improvements in pipe properties. The standard reference pipe was a "Flowtite® pipe" on the market of the same diameter etc. without the liner of the invention, e.g. with an unsaturated polyester resin of low flexibility and without colour pigments.

**Table 1: The pipes**

| | **Reference** | **Example 1** | **Example 2** | **Example 3** | **Example 4** | **Example 5** |
|---|---|---|---|---|---|---|
| Synthetic non-woven (A) | 0 mm | 0 mm | 0 mm | 0.25 mm | 0 mm | 0 mm |
| Glass non-woven (B) | 0.2 mm | 0.6 mm | 0.6 mm | 0.6 mm | 0.2 mm | 0.2 mm |
| Chopped glass strands (C) | 0.8 mm | 0.8 mm | 0.1 mm | 0.1 mm | 0.8 mm | 0.8 mm |
| Unsaturated polyester resin/resin blend Flexibility | low | high | high | high | high | high |
| Pigment paste | 0% | 2.5 % TiO₂ paste | 2.5 % ZnS paste | 1 % ZnS paste | 2.5 % ZnS paste | 0 % |

**Table 2: Result of Performance Tests**

| | | | | | | |
|---|---|---|---|---|---|---|
| Abrasion DIN 19656 gravel, 100 000 cycles, wall loss /mm | 0.98 | 0.56 | 0.35 | 0.21 | 0.28 | 0.38 |
| Water jetting resistance DIN19523 | fail | fail | pass | pass | pass | pass |
| Resistance to internal pressure EN1447, time to failure at 0.9% strain /hrs | 1000 | 16 | 3300 | >5000 | >5000 | >5000 |
| Impact performance at 20-25 °C (BDS540 Appendix J) 515 g H₅₀ /m | 1.5 | >10 no crack | >10 no crack | >10 no crack | >10 no crack | >10 no crack |
| Impact performance at 20-25 °C (BDS540 Appendix J) 4000 g H₅₀ /m | <0.2 | >3.5 no crack | 3 | 3.1 | >3.5 no crack | >3.5 no crack |
| Impact performance at 0.5 °C (BDS540 Appendix J) 515 g H₅₀ /m | 1.1 | 9.5 | 2 | 2.5 | >10 no crack | >10 no crack |

All in all, the results of the performance test (Table 2) prove that the use of the liner of the invention shows surprisingly good results over the Reference tube.

Thus, all Examples 1, 2, 3, 4 and 5 show superior results over the reference in the abrasion test and in all impact performance tests.

Comparing only Examples 2, 3, 4 and 5 (the examples with zinc sulphide as colour pigment) with the reference, all pass the water jetting resistance test whereas the reference fails and all are superior in their resistance to internal pressure over the reference.

Comparing Example 1 (the example with TiO₂ as colour pigment) with Examples 2, 3, 4 and 5 (the examples with zinc sulphide as colour pigment), all show superior results over Example 1 in a) the water jetting resistance test, b) their resistance to internal pressure and c) the abrasion test.

Examples 1, 4 and 5 comparing to examples 2 and 3 show improve impact results at lower temperature which is contributed to the greater thickness of the chopped fibre layer (C).

## Claims

1. A glass-reinforced plastic pipe liner of improved impact performance applied to the interior of a pipe comprising:
- a layer B) consisting of a coat being reinforced by non-woven fibres, the coat being formed from at least one unsaturated polyester resin, optionally mixed with at least one vinyl ester resin;
- a layer C) consisting of a coat being reinforced by chopped fibre strands, the coat being formed from at least one unsaturated polyester resin, optionally mixed with at least one vinyl ester resin;
wherein at least one of the layers B) or C) comprises colour pigments present at 0.2 - 5.0 wt% per weight of the unsaturated polyester resin.

2. The glass-reinforced plastic pipe liner according to claim 1 comprising in addition:
- a layer A) consisting of a coat being reinforced by a synthetic veil formed from spun-bond or thermally bonded fibres of polyester, polyamide or mixtures thereof, the coat being formed from at least one unsaturated polyester resin, optionally mixed with at least one vinyl ester resin, optionally comprising colour pigments present at 0.2 - 5.0 wt% per weight of the unsaturated polyester resin.

3. The glass-reinforced plastic pipe liner according to any one of claims 1 or 2 comprising in the layers B) and/or C) and in the optional layer A) colour pigments present at 0.2 - 5.0 wt% per weight of the unsaturated polyester resin; preferably comprising in the layers B), C) and in the optional layer A) colour pigments present at 0.2 - 5.0 wt% per weight of the unsaturated polyester resin.

4. The glass-reinforced plastic pipe liner according to any one of claims 1 to 3, wherein
- the optional layer A) has - thermally bonded - a thickness of 0.05 - 2.0 mm, preferably a thickness of 0.1 - 1.0 mm, more preferably a thickness of 0.15 - 0.35 mm; and/or
- the layer B) has a thickness of 0.1 - 4.0 mm, preferably a thickness of 0.2 - 2.0 mm, more preferably a thickness of 0.2 - 0.6 mm; and/or
- the layer C) has a thickness of 0.05 - 4.0 mm, preferably a thickness of 0.1 - 2.0 mm, more preferably a thickness of 0.1 - 1.0 mm.

5. The glass-reinforced plastic pipe liner according to any one of claims 1 to 4, wherein
- the layer B) is reinforced by a glass fibre non-woven veil; and/or
- the layer C) is reinforced by a glass fibre layer of chopped strands.

6. The glass-reinforced plastic pipe liner according to any one of claims 1 to 5, wherein the unsaturated polyester resin, optionally mixed with vinyl ester resin, in layers B) and/or C) and optionally in optional layer A) includes pigments selected from Ti0₂ and zinc sulphide, preferably from zinc sulphide;
and/or wherein the pigments are present at 0.25 - 3.5 wt% per weight of the unsaturated polyester preferably at 0.5 - 2.5 wt% per weight of the unsaturated polyester;
preferably
wherein the pigments in layers B), C) and in optional layer A) are zinc sulphide pigments wherein the zinc sulphide pigments are present at 0.25 - 3.5 wt% per weight of the unsaturated polyester preferably at 0.5 - 2.5 wt% per weight of the unsaturated polyester.

7. The glass-reinforced plastic pipe liner according to any one of claims 1 to 6, wherein at least one unsaturated polyester resin of layer B) and/or of layer C) and/or of the optional layer A) is based on maleic anhydride, isophthalic acid and/or orthophthalic anhydride, preferably wherein at least one unsaturated polyester resin of layer B), of layer C) and of optional layer A) is based on maleic anhydride, isophthalic acid and/or orthophthalic anhydride, more preferably wherein all the unsaturated polyester resins of layer B) and/or of layer C) and/or of optional layer A) are based on maleic anhydride, isophthalic acid and/or orthophthalic anhydride, most preferably wherein all the unsaturated polyester resins of layer B), layer C and of optional layer A) are based on maleic anhydride, isophthalic acid and/or orthophthalic anhydride.

8. The glass-reinforced plastic pipe liner according to any one of claims 1 to 7, wherein the unsaturated polyester resin in optional layer A) is present at ≥ 70 wt%, ≥ 75 wt% or ≥ 80 wt%, preferably at between and including 80 - 90 wt% of the weight of the resin material of layer A), preferably wherein the unsaturated polyester resin in optional layer A) is present at ≥ 80 wt% or at between and including 80 - 90% of the weight of the resin material of layer A);
and/or
wherein the unsaturated polyester resin in layer B) is present at ≥ 70 wt%, ≥ 75 wt% or ≥ 80 wt%, preferably at between and including 80 - 90 wt% of the weight of the resin material of layer B), preferably wherein the unsaturated polyester resin in optional layer B) is present at ≥ 80 wt% or at between and including 80 - 90 wt% of the weight of the resin material of layer B);
and/or
wherein the unsaturated polyester resin in layer C) is present at ≥ 40 wt%, ≥ 45 wt% or ≥ 50 wt% of the weight of the resin material of layer C), preferably at between and including 50 - 70 wt% of the weight of the resin material of layer C), preferably wherein the unsaturated polyester resin in optional layer C) is present at ≥ 50 wt% or at between and including 50 - 70 wt% of the weight of the resin material of layer C);
preferably
- wherein the unsaturated polyester resin in optional layer A) is present at ≥ 80 wt% or at between and including 80 - 90% of the weight of the resin material of layer A),
- the unsaturated polyester resin in optional layer B) is present at ≥ 80 wt% or at between and including 80 - 90% of the weight of the resin material of layer B), and
- the unsaturated polyester resin in layer C) is present at ≥ 50 wt% or at between and including 50 - 70 wt% of the weight of the resin material of layer C).

9. The glass-reinforced plastic pipe liner according to any one of claims 1 to 8, wherein the vinyl ester resin is present at 0 to 30 wt%, 0 to 20 wt% or 0 to 10 wt% of the weight of the resin material of layer B), and/or layer C) and/or the optional layer A), preferably the vinyl ester resin is present at 0 to 30 wt%, 0 to 20 wt% or 0 to 10 wt% of the weight of the resin material of layer B and layer C and the optional layer A).

10. The glass-reinforced plastic pipe liner according to any one of claims 1 to 9, wherein the vinyl ester resin in layer B) and/or layer C) and the optional layer A) is based on vinyl ester (meth)acrylates, preferably wherein the vinyl ester resins in layer B), layer C) and the optional layer A) are based on vinyl ester (meth)acrylates.

11. The glass-reinforced plastic pipe liner according to any one of claims 1 to 10, wherein the improved impact performance manifests itself at temperatures -5 to 45 °C.

12. A process for the production of the glass-reinforced plastic pipe liner according to any one of claims 1 to 11, wherein the process is a continuous filament winding process or a discontinuous filament winding process.

## Patentansprüche

1. Glasverstärkte Kunststoffrohauskleidung mit verbesserter Schlagfestigkeit, die auf das Innere eines Rohres aufgetragen wird, umfassend:
- eine Schicht B), bestehend aus einer Beschichtung, die durch Vliesfesem verstärkt ist, wobei die Beschickung aus mindestens einem ungesättigten Polyesterharz, optional gemischt mit mindestens einem Vinylesterharz, gebildet ist;
- eine Schicht C), bestehend aus einer Beschichtung, die durch Schnittfaserstränge verstärkt ist, wobei die Beschichtung aus mindestens einem ungesättigten Polyesterharz, optional gemischt mitmindestens einem Vinylesterharz, gebildet ist;
wobei mindestens eine der Schichten B) oder C) Farbpigmente umfasst, die in einer Menge von 0,2 bis 5,0 Gew.-%, bezogen auf das Gewicht des ungesättigten Polyesterharzes, vorhanden sind.

2. Glasfaserverstärkte Kunststoffrohrauskleidung nach Anspruch 1, zusätzlich umfassend:
- eine Schicht A), bestehend aus einer Beschichtung, die durch einen synthetischen Vliesstoff verstärkt ist, der aus Spinnvliesfusem oder thermisch gebundenen Fasern aus Polyester, Polyamid oder Mischungen davon gebildet ist, wobei die Beschichtung aus mindestens einem ungesättigten Polyesterharz, optional gemischt mit mindestens einem Vinylesterharz, gebildet ist, optional umfassend Farbpigmente, die in einer Menge von 0,2 - 5,0 Gew.-%, bezogen auf das Gewicht des ungesättigten Polyesterharzes, vorhanden sind.

3. Glasfaserverstärkte Kunststoffrohrauskleidung nach einem der Ansprüche 1 oder 2, umfassend in den Schichten B) und/oder C) und in der optionalen Schicht A) Farbpigmente, die in einer Menge von 0,2 - 5,0 Gew.-%, bezogen auf das Gewicht des ungesättigten Polyesterharzes, vorhanden sind; vorzugsweise umfassend in den Schichten B), C) und in der optionalen Schicht A) Farbpigmente, die in einer Menge von 0,2 - 5,0 Gew.-%, bezogen auf das Gewicht des ungesättigten Polyesterharzes, vorhanden sind.

4. Glasfaserverstärkte Kunststoffrohrauskleidung nach einem der Ansprüche 1 bis3, wobei
- die optionale Schicht A) thermisch gebunden - eine Dicke von 0,05 - 2,0 mm, vorzugsweise eine Dicke von 0,1- 1,0mm, nochbevorzugter eine Dicke von 0,15 - 0,35 mm aufweist; urd/oder
- die Schicht B) eine Dicke von 0,1 - 4,0 mm, vorzugsweise eine Dicke von 0,2 - 2,0 mm, noch bevorzugtereine Dicke von 0,2 - 0,6 mm aufweist; und/oder
- die Schicht C) eine Dicke von 0,05 - 4,0 mm, vorzugsweise eine Dicke von 0,1- 2,0 mm, noch bevorzugter eine Dicke von 0,1 -1,0 mm aufweist.

5. Glasfaserverstärkte Kunststoffrohrauskleidung nach einem der Ansprüche 1 bis 4, wobei
- die Schicht B) durch einen Glasfeservliesstoffverstärkt ist; und/oder
- die Schicht C) durch eine Glasfaserschicht aus Schnittfasemverstärkt ist

6. Glasfusetverstärkte KKunststoffrohrauskleidung nach einem der Ansprüche 1 bis 5, wobei das ungesättigte Polyesterharz, optional gemischt mit Vinylesterharz, in den Schichten B) und/oder C) und optional in der optionalen Schicht A) Pigmente, ausgewählt aus TiQ₂ und Zinksulfid, vorzugsweise aus Zinksulfid, enthält;
und/oder wobei die Pigmente in einer Menge von 0,25 -3,5 Gew.-%, bezogen auf das Gewicht des ungesättigten Polyesters, vorzugsweise in einer Menge von 0,5 - 2,5 Gew.-%, bezogen auf das Gewicht des Polyesters, vorhanden sind;
vorzugsweise
wobei die Pigmente in den Schichten B), C) und in der optionalen Schicht A) Zinksulfidpigmente sind, wobei die Zinksulfidpigmente in einer Menge von 0,25 - 3,5 Gew.-%, bezogen auf das Gewicht des Polyesters, vorzugsweise in einer Menge von 0,5 - 2,5 Gew.-%, bezogen auf das Gewicht des Polyesters, vorhanden sind.

7. Glasfaserverstärkte Kunststoffrohrauskleidung nach einem der Ansprüche 1 bis 6, wobei mindestens ein ungesättigtes Polyesterharz der Schicht B) und/oder der Schicht C) und/oder der optionalen Schicht A) auf Maleinsäureanhydrid, Isophthalsäure- und/oder Orthophthalsäureanhydrid basiert, vorzugsweise wobei mindestens ein ungesättigtes Polyesterharz der Schicht B), der Schicht C) und der optionalen Schicht A) auf Maleinsäureanhydrid, Isophthalsäure- und/oder Orthophthalsäureanhydrid basiert, noch bevorzugter wobei alle ungesättigten Polyesterharze der Schicht B) und/oder der Schicht C) und/oder der optionalen Schicht A) aufMaleinsäureanhydrid, Isophthalsäure- und/oder Orthophthalsäureanhydrid basieren, am meisten bevorzugt wobei alle Polyesterharze der Schicht B), der Schicht C) und der optionalen Schicht A) auf Maleinsäureanhydrid, Isophthalsäure- und/oder Orthophthalsäureanhydrid basieren.

8. Glasfaserverstärkte Kunststoffrohrauskleidung nach einem der Ansprüche 1 bis 7, wobei das ungesättigte Polyesterharz in der optionalen Schicht A) in einer Menge von ≥70 Gew.-%, ≥75 Gew.-% oder ≥80 Gew.-%, vorzugsweise zwischen und einschließlich 80 - 90 Gew.-%, bezogen auf das Gewicht des Harzmaterials der Schicht A), vorhanden ist, vorzugsweise wobei das ungesättigte Polyesterharz in der optionalen Schicht A) in einer Menge von ≥80 Gew.-% oder zwischen und einschließlich 80 - 90 %, bezogen auf das Gewicht des Harzmaterials der Schicht A), vorhanden ist; und/oder
wobei das ungesättigte Polyesterharz in der Schicht B) in einer Menge von ≥70 Gew.-%, ≥75 Gew.-% oder ≥80 Gew.-%, vorzugsweise zwischen und einschließlich 80 - 90 Gew.-%, bezogen auf das Gewicht des Harzmaterials der Schicht B), vorhanden ist, vorzugsweise wobei das ungesättigte Polyesterharz in der optionalen Schicht B) in einer Menge von ≥80 Gew.-% oder zwischen und einschließlich 80 - 90 Gew.-%, bezogen auf das Gewicht des Harzmaterials der Schicht B), vorhanden ist;
und/oder
wobei das ungesättigte Polyesterharz in Schicht C) in einer Menge von ≥40 Gew.-%, ≥45 Gew.-% oder ≥50 Gew.-%, bezogen auf das Gewicht des Harzmaterials der Schicht C), vorzugsweise zwischen und einschließlich 50 - 70 Gew.-%, bezogen auf das Gewicht des Harzmaterials der Schicht C), vorhanden ist, vorzugsweise wobei das ungesättigte Polyesterharz in der optionalen Schicht C) in einer Menge von ≥50 Gew.-% oder zwischen und einschließlich 50 - 70 Gew.-%, bezogen auf das Gewicht des Hatzmaterials der Schicht C), vorhanden ist;
vorzugsweise
- wobei das ungesättigte Polyesterharz in der optionalen Schicht A) in einer Menge von ≥80 Gew.-% oder zwischen und einschließlich 80 - 90 %, bezogen auf das Gewicht des Harzmaterials der Schicht A), vorhanden ist,
- das ungesättigte Polyesterharz in der optionalen Schicht B) in einer Menge von≥80 Gew.-% oder zwischen und einschließlich 80 - 90 Gew.-%, bezogen auf das Gewicht des Harzmaterials der Schicht B), vorhanden ist,
und
- das ungesättigte Polyesterharz in der Schicht C) in einer Menge von ≥50 Gew.-% oder zwischen und einschließlich 50 - 70 Gew.-%, bezogen auf das Gewicht des Harzmaterials der Schicht C), vorhanden ist.

9. Glasfaserverstärkte Kunststoffrohrauskleidung nach einem der Ansprüche 1 bis 8, wobei das Vinylesterharz in einer Menge von 0 bis 30 Gew.-%, 0 bis 20 Gew.-% oder 0 bis 10 Gew.-%, bezogen auf das Gewicht des Harzmaterials der Schicht B) und/oder der Schicht C) und/oder der optionalen Schicht A), vorhanden ist, vorzugsweise wobei das Vinylesterharz in einer Menge von 0 bis 30 Gew.-%, 0 bis 20 Gew.-% oder 0 bis 10 Gew.-%, bezogen auf das Gewicht des Harzmaterials der Schicht B) und der Schicht C) und der optionalen Schicht A), vorhanden ist.

10. Glasfaserverstärkte Kunststoffrohrauskleidung nach einem der Ansprüche 1 bis 9, wobei das Vinylesterharz in Schicht B) und/oder Schicht C) und der optionalen Schicht A) auf Vinylester(meth)acrylaten basiert, vorzugsweise wobei die Vinylesterharze in Schicht B), Schicht C) und der optionalen Schicht A) auf Vinylester(meth)acrylaten basieren.

11. Glasfaserverstärkte Kunststoffrohrauskleidung nach einem der Ansprüche 1 bis 10, wobei sich die verbesserte Schlagfestigkeit bei Temperaturen von -5 bis 45 °C zeigt.

12. Verfahren zur Herstellung der glasfaserverstärkten Kunststoffrohrauskleidung nach einem der Ansprüche 1 bis 11, wobei das Verfahren ein kontinuierliches Filamentwickelverfahren oder ein diskontinuierliches Filmnentwickelverfuhren ist.

## Revendications

1. Revêtement de tuyau en plastique renforcé de verre à performances d'impact améliorées appliqué à l'intérieur d'un tuyau comprenant :
- une couche B) constituée d'un revêtement étant renforcé par des fibres non tissées, le revêtement étant formé à partir d'au moins une résine de polyester insaturé, éventuellement mélangée avec au moins une résine d'ester de vinyle ;
- une couche C) constituée d'un revêtement renforcé de brins de fibre coupés, le revêtement étant formé à partir d'au moins une résine de polyester insaturé, éventuellement mélangée avec au moins une résine d'ester de vinyle ;
au moins une des couches B) ou C) comprenant des pigments de couleur présents à 0,2 à 5,0 % en poids de la résine de polyester insaturé.

2. Revêtement de tuyau en plastique renforcé de verre selon la revendication 1 comprenant de plus :
- une couche A) constituée d'un revêtement qui est renforcé par un voile synthétique formé à partir de fibres filées ou liées thenniquement de polyester, de polyamide ou de leurs mélanges, le revêtement étant formé à partir d'au moins une résine de polyester insaturé, éventuellement mélangée avec au moins une résine d'ester de vinyle, éventuellement comprenant des pigments de couleur présents à 0,2 à 5,0 % en poids en poids de la résine de polyester insaturé.

3. Revêtement de tuyau en plastique renforcé de verre selon l'une quelconque des revendications 1 ou 2 comprenant dans les couches B) et/ou C) et dans la couche optionnelle A) des pigments de couleur présents à 0,2 à 5,0 pour cent en poids de la résine de polyester insaturé ; de préférence comprenant dans les couches B), C) et dans la couche optionnelle A) des pigments de couleur présents à 0,2 à 5,0 % en poids en poids de la résine de polyester insaturé.

4. Revêtement de tuyau en plastique renforcé de verre selon l'une quelconque des revendications 1 à 3, dans lequel
- la couche optionnelle A) a - thermiquement liée-une épaisseur de 0,05 à 2,0 mm, de préférence une épaisseur de 0,1 à 1,0 mm, davantage de préférence une épaisseur de 0,15 à 0,35 mm ; et/ou
- la couche B) a une épaisseur de 0,1 à 4,0 mm, de préférence une épaisseur de 0,2 à 2,0 mm, davantage de préférence une épaisseur de 0,2 à 0,6 mm ; et/ou
- la couche C a une épaisseur de 0,05 à 4,0 mm, de préférence une épaisseur de 0,1 à 2,0 mm, davantage de préférence une épaisseur de 0,1 à 1,0mm.

5. Revêtement de tuyau en plastique renforcé de verre selon l'une quelconque des revendications 1 à 4, dans lequel
- la couche B) est renforcée par un voile non tissé de fibre de verre ; et/ou
- la couche C) est renforcée par une couche de fibre de verre de brins coupés.

6. Revêtement de tuyau en plastique renforcé de verre selon l'une quelconque des revendications 1 à 5, dans lequel la résine de polyester insaturé, éventuellement mélangée avec une résine d'ester de vinyle, dans les couches B) et/ou C) et éventuellement dans la couche optionnelle A) comprend des pigments choisis parmi T₁Q₂ et le sulfure de zinc, de préférence du sulfure de zinc ;
et/ou les pigments étant présents à 025 à 3.5 % en poids du polyester insaturé de préférence à 0.5 à 2,5 % en poids du polyester insaturé ;
de préférence
les pigments dans les couches B), C) et dans la couche optionnelle A) étant des pigments de sulfate de zinc les pigments de sulfure de zinc étant présents à 0,25 à 3,5 % en poids du polyester insaturé de préférence à 0,5 à 25 % en poids du polyester insaturé.

7. Revêtement de tuyau en plastique renforcé de verre selon l'une quelconque des revendications 1 à 6, dans lequel au moins une résine de polyester insaturé de la couche B) et/ou de la couche C) et/ou de la couche optionnelle A) est basée sur l'anhydride maléique, l'acide isophtalique et/ou l'anhydride orthophtalique, de préférence au moins une résine de polyester insaturé de la couche B), de la couche C) et de la couche optionnelle A) est basée sur l'anhydride maléique, l'acide isophtalique et/ou l'anhydride orthophtalique, davantage de préférence toutes les résines de polyester insaturé de la couche B) et/ou de la couche C) et/ou de la couche optionnelle A) étant basées sur l'anhydride maléique,
l'acide isophtalique et/ou l'anhydride orthophtalique, de préférence entre toutes les résines de polyester insaturé de la couche B), de la couche C et de la couche optionnelle A) étant basées sur l'anhydride maléique, l'acide isophtalique et/ou l'anhydride orthophtalique.

8. Revêtement de tuyau en plastique renforcé de verre selon l'une quelconque des revendications 1 à 7, dans lequel la résine de polyester insaturé dans la couche optionnelle A) est présente à ≥ 70 % en poids, ≥ 75 % en poids ou ≥ 80 % en poids, de préférence à entre et comprenant 80 à 90 % du poids du matériau de résine de la couche A), de préférence la résine de polyester insaturé dans la couche optionnelle A) étant présente à ≥ 80 % en poids ou à entre et comprenant 80 à 90 % du poids du matériau de résine de la couche A) ;
et/ou
la résine de polyester insaturé dans la couche B) étant présente à ≥ 70 % en poids, ≥ 75 % en poids ou ≥ 80 % en poids, de préférence à entre et comprenant 80 à 90 % en poids du poids du matériau de résine de la couche B), de préférence la résine de polyester insaturé dans la couche optionnelle B) étant présente à ≥ 80 % en poids ou entre et comprenant 80 à 90 % en poids du poids du matériau de résine de la couche B) ;
et/ou
la résine de polyester insaturé dans la couche C) étant présente à ≥ 40 % en poids, ≥ 45 % en poids ou ≥ 50 % en poids du poids du matériau de résine de la couche C), de préférence à entre et comprenant 50 à 70 % en poids du poids du matériau de résine de la couche C), de préférence la résine de polyester insaturé dans la couche optionnelle C) étant présente à ≥ 50 % en poids ou à 50 à 70 % en poids du poids du matériau de résine de la couche C) ;
de préférence
- la résine de polyester insaturé dans la couche optionnelle A) est présente à ≥ 80 % en poids ou à entre et comprenant 80 à 90 % du poids du matériau de résine de la couche A),
- la résine de polyester insaturé dans la couche optionnelle B) est présente à ≥ 80 % en poids ou à entre et comprenant 80 à 90 % du poids du matériau de résine de la couche B),
et
- la résine de polyester insaturé dans la couche C) est présente à ≥ 50 % en poids ou à entre et comprenant 50 à 70 % en poids du poids du matériau de résine de la couche C).

9. Revêtement de tuyau en plastique renforcé de verre selon l'une quelconque des revendications 1 à 8, dans lequel la résine d'ester de vinyle est présente à 0 à 30 % en poids, à 0 à20 % en poids ou à 0 à 10 % en poids du poids du matériau de résine de la couche B), et/ou de la couche C) et/ou de la couche optionnelle A), de préférence la résine d'ester de vinyle est présente à 0 à 30 % en poids, à 0 à 20 % en poids ou à 0 à 10 % en poids du poids du matériau de résine de la couche B) et de la couche C) et de la couche optionnelle A).

10. Revêtement de tuyau en plastique renforcé de verre selon l'une quelconque des revendications 1 à 9, dans lequel la résine d'ester de vinyle dans la couche B) et/ou la couche C) et la couche optionnelle A) est basée sur des (méth)acrylales d'ester de vinyle, de préférence les résines d'ester de vinyle dans la couche B), la couche C) et la couche optionnelle A) étant basées sur des (méth)acrylates d'ester de vinyle.

11. Revêtement de tuyau en plastique renforcé de verre selon l'une quelconque des revendications 1 à 10, dans lequel les performances d'impact améliorées se manifestent elles-mêmes à des températures de - 5 à 45°C.

12. Procédé de production du revêtement de tuyau en plastique renforcé de verre selon l'une quelconque des revendications 1 à 11, dans lequel le procédé est un procédé d'enroulement de filament continu ou un procédé d'enroulement de filament discontinu.
